# EUROPEAN PATENT SPECIFICATION

(11) **EP 2 902 601 B1**
(45) Date of publication and mention of the grant of the patent: **13.06.2018**
(21) Application number: 13842382.7
(22) Date of filing: 04.04.2013
(51) Int. Cl.: F01N 3/28, B01D 53/94, B01J 35/04, F01N 3/08, F01N 3/20

(54) **EXHAUST GAS DENITRATION DEVICE**
VORRICHTUNG ZUR DENITRIERUNG VON ABGASEN
DISPOSITIF DE DÉNITRATION DE GAZ D'ÉCHAPPEMENT

(30) Priority: 27.09.2012 JP 2012213303
(43) Date of publication of application: 05.08.2015
(73) Proprietor: Hitachi Zosen Corporation, Osaka-shi, Osaka 559-8559 (JP)
(72) Inventor: TANAKA, Hironaka, Osaka-shi, Osaka 559-8559 (JP)
(74) Representative: Van Breda, Jacobus
(86) International application number: PCT/JP2013/060271
(87) International publication number: WO 2014/050179

(56) References cited:
- EP-A1- 2 894 307
- WO-A1-2012/060155
- WO-A1-2012/107637
- WO-A1-2013/129089
- DE-C1- 19 745 068
- JP-A- H10 511 038
- JP-A- H11 193 714
- JP-A- S62 110 518
- JP-A- 2002 239 345
- JP-A- 2003 056 337
- JP-A- 2009 190 022

## Description

### Technical Field

The present invention relates to an exhaust gas denitration device that denitrates exhaust gas discharged from a reciprocating engine.

### Background Art

Conventionally, a denitration device provided in, for example, a high-pressure exhaust system for a diesel engine includes a cylindrical reaction container having high pressure resistance. For example, a reaction container in Patent Literature 1 has a ceramic sheet cylindrically wrapped to form a catalyst element. The catalyst element is radially divided into sectors in cross section so as to be easily inserted into the cylindrical reaction container. The divided catalyst elements are combined to have a cylindrical shape for use.

In this case, reciprocating engines include a diesel engine and a gasoline engine that have reciprocating pistons.

### Citation List

### Patent Literature

Patent Literature 1: Japanese Patent Laid-Open No. 07-24259

### Summary of Invention

### Technical Problem

In the conventional configuration, if the catalyst element is formed by cylindrically wraping the ceramic sheet almost as large as a reaction container, unfortunately, the large catalyst element may require a large cutting device. Moreover, if the catalyst element is used for an exhaust gas denitration device for a large marine diesel engine, the separate element simply assembled in the container may have poor durability against engine vibrations.

The present invention has been devised to solve the problem. An object of the present invention is to provide an exhaust gas denitration device that allows installation of small catalyst elements with a sufficient filling area ratio in an irregular shaped space having a hollow part in cross-section in a reaction container, obtains sufficient strength, and improves durability against operations and so on.

DE 197 45 068 teaches a marine exhaust gas denitration device suitable for providing on an exhaust gas passage of a marine diesel engine and comprising a reaction container that receives exhaust gas discharged from the marine diesel engine, the reaction container containing catalyst elements,
the reaction container being shaped like a cylinder,
the reaction container including a columnar hollow part that faces a body part of the reaction container and is formed about an eccentric axis located at a predetermined distance from a container axis, a bulkhead that substantially circumscribe the hollow part, and a reaction chamber that is separated from the hollow part via the bulkhead and is formed in an axial direction of the reaction container,
the reaction chamber including a unit group containing a plurality of assembled catalyst units,
the catalyst units being shaped at least like a trapezoid in cross section, the catalyst units containing the catalyst elements,
the unit group having an outer periphery that includes one of an outer surface of a polygonal column substantially inscribed in the body part of the reaction container,
the body part of the reaction container having a plurality of exhaust gas inlet ports that introduce exhaust gas discharged from the marine diesel engine into the hollow part facing the body part, the hollow part having an exhaust receiver tank formed at a center,
the hollow part having a vaporizing chamber and a communicating part, the vaporizing chamber communicating with the exhaust receiver tank, the communicating part connecting the exhaust receiver tank and the reaction chamber.

### Solution to problem

In order to solve the problem the marine exhaust gas denitration device of the invention has the features of claim 1. Different from DE 197 45 068 in the invention the bulkhead is shaped like a partial polygonal cylinder. Further in the invention the unit group having an outer periphery that includes one of an outer surface of a polygonal column substantially inscribed in the body part of the reaction container and a partial outer surface of the polygonal column, the outer periphery including surfaces forming sides of the catalyst units that are square and rectangular in cross section and surfaces being inclined at a predetermined angle with respect to the surfaces forming the sides of the catalyst units that are square and rectangular in cross section, and forming oblique sides of the catalyst units that are trapezoidal in cross section. Further the reaction container includes an end plate that faces the vaporizing chamber, the end plate having a spray nozzle so as to spray a reducing agent in a conical shape.

An invention according to a second aspect is the exhaust gas denitration device according to the first aspect, wherein the hollow part is shaped like a cylinder, the bulkhead is shaped like one of a polygonal cylinder and a partial polygonal cylinder that substantially circumscribe the hollow part, and
the unit group has an inner periphery fit onto the bulkhead, the inner periphery being shaped like one of a polygonal cylinder and a partial polygonal cylinder, the inner periphery including a surface forming the side of the catalyst unit square or/and rectangular in cross section and a surface forming the oblique side of the catalyst unit trapezoidal in cross section.

An invention according to a third aspect is the exhaust gas denitration device according to the first or second aspect, wherein the hollow part is located at an eccentric position at a predetermined distance from the axis of the reaction container and faces the body part.

An invention according to a fourth aspect is the exhaust gas denitration device according to one of the first to third aspects, wherein the catalyst units contain the honeycomb catalyst elements stacked in storage frames, each including a front guide part and a rear guide part at the front and the rear of the storage frame, the front and rear guide parts fit to each other so as to connect the storage frames in the flowing direction of exhaust gas, and
the unit group is assembled such that side surfaces of the storage frames are in contact with each other.

An invention according to a fifth aspect is the exhaust gas denitration device according to one of the first to fourth aspects, wherein the hollow part selectively contains an exhaust receiver tank that receives exhaust gas from the reciprocating engine, a vaporizing chamber for spraying a reducing agent into exhaust gas, a mixing chamber that mixes and stirs mixed gas of exhaust gas and the reducing agent, a heat exchanger unit, and a gas passage for transporting at least one type of gas.

### Advantageous Effects of Invention

According to the invention of the first aspect, the catalyst elements are stored in the catalyst units that are square, rectangular, and trapezoidal in cross section, and then the catalyst units are assembled into the reaction chamber having an irregular shape exclucding the hollow part in the reaction container, forming the unit group. The outer periphery of the unit group is shaped like a polygon or a partial polygon that is substantially inscribed in the body part of the reaction container. The oblique sides of the polygon are formed by surfaces forming the oblique sides of the catalyst units that are trapezoidal in cross section. This configuration allows installation of the catalyst elements with a sufficient filling area ratio via the polygonal unit group that is substantially inscribed in the body part. Moreover, since the catalyst elements are stored in the catalyst units, sufficient strength can be obtained so as to improve durability against, for example, vibrations in a ship or the like.

According to the invention of the second aspect, the bulkhead is shaped like a polygonal cylinder or a partial polygonal cylinder that substantially circumscribes the hollow part, and the inner periphery of the unit group is formed on the outer surface of a polygonal cylinder or a partial polygonal cylinder that is fit with a similar shape onto the bulkhead, and surfaces forming the oblique sides of the catalyst units trapezoidal in cross section constitute surfaces inclined with respect to the outer surfaces of the catalyst units that are rectangular and square in cross section, allowing the installation of the catalyst elements with a sufficient filling area ratio via the polygonal unit group.

According to the invention of the third aspect, the installation of the hollow part in contact with the body part can easily supply or discharge exhaust gas, a heat exchanging fluid, an agent, and so on to and from the hollow part, increasing flexibility in the use of the hollow part.

According to the invention of the fourth aspect, the catalyst units are connected in the longitudinal direction. Thus, the unit group can be set optionally sized. Moreover, the catalyst units assembled in contact with each other can obtain sufficient strength and durability.

According to the invention of the fifth aspect, the hollow part of the reaction container selectively contains an exhaust receiver tank, a vaporizing chamber, a mixing chamber, a heat exchanger unit, and a gas passage, allowing integration of the components of the exhaust gas denitration device in the reaction container, and leading to a size reduction of the exhaust gas denitration device.

### Brief Description of Drawings

[FIG. 1] FIG. 1 is a cross-sectional view showing a reaction container according to a first embodiment of an exhaust gas denitration device of the present invention.
[FIG. 2] FIG. 2 is a partial perspective view schematically showing the reaction container.
[FIG. 3] FIG. 3 is a structural diagram showing the exhaust gas denitration device.
[FIG. 4] FIG. 4 is a perspective view showing a catalyst unit that is square in cross section.
[FIG. 5] FIG. 5 is a perspective view showing a catalyst unit that is rectangular in cross section.
[FIG. 6] FIG. 6 is a perspective view showing a catalyst unit that is trapezoidal in cross section.
[FIG. 7] FIG. 7 is a cross-sectional view showing an assembly structure of a unit group in plan view.
[FIG. 8] FIG. 8 is a cross-sectional view showing a reaction container according to a second exhaust gas denitration device which is not part of the present invention.
[FIG. 9] FIG. 9 is a structural diagram of the reaction container.

### Description of Embodiments

Embodiments of the present invention will be described below with reference to the accompanying drawings.

### [First Embodiment]

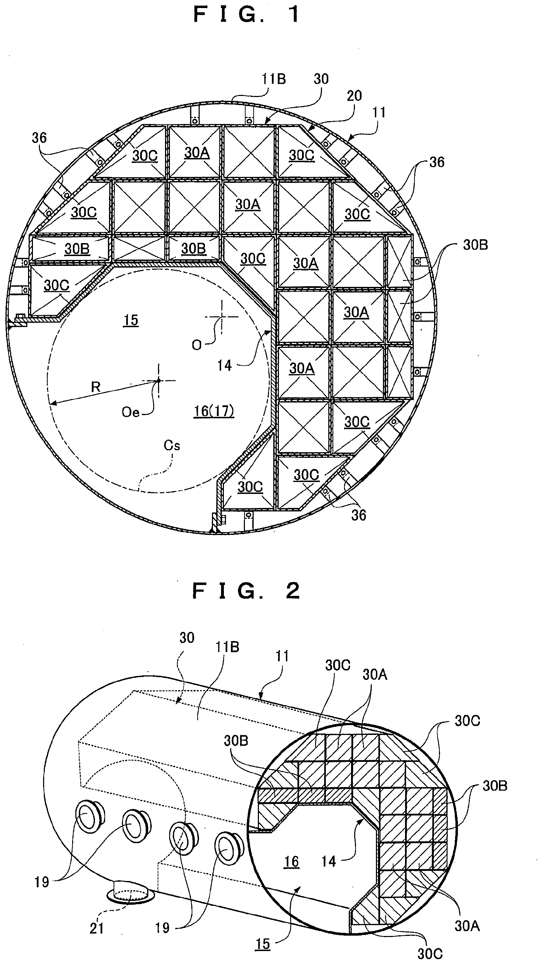

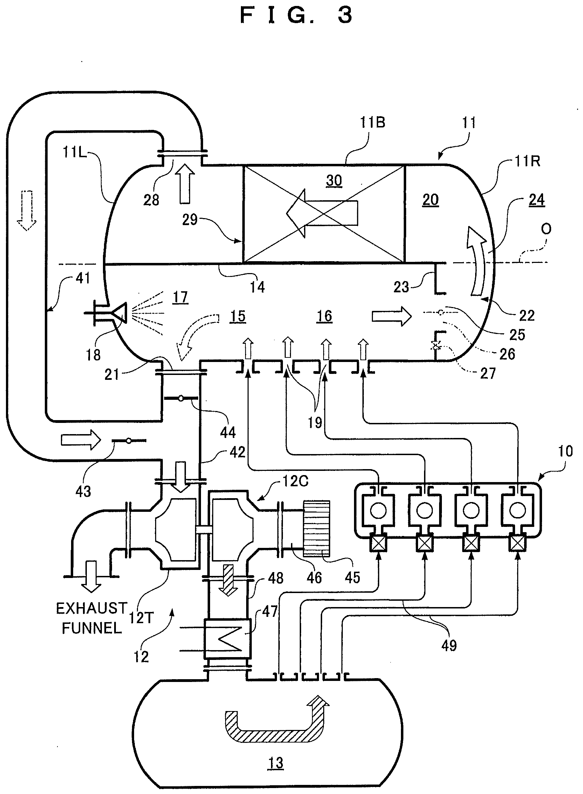

Referring to FIGS. 1 to 7, a first embodiment of an exhaust gas denitration device of the present invention will be described. The exhaust gas denitration device is provided on, for example, the exhaust gas passage of a large marine diesel engine. As shown in FIG. 3, the exhaust gas denitration device includes a diesel engine 10, a reaction container 11 according to the present invention, a supercharger 12 driven by exhaust gas from the diesel engine 10, and a scavenging air receiver tank 13 that temporarily stores combustible air compressed by the supercharger 12 and supplies the air to the diesel engine 10.

### (Reaction container)

The reaction container 11 is a horizontal cylindrical pressure-resistant container that includes a cylindrical body part 11B and curved end plates 11L and 11R closing one end and another end of the body part 11B, respectively. The reaction container 11 can contain a columnar hollow part 15 along a hollow cylindrical part Cs having a radius R about an eccentric axis Oe located at a predetermined distance from a container axis O. The hollow part 15 faces (is in contact with) the body part 11B. Moreover, a bulkhead 14 shaped like a partially polygonal cylinder substantially circumscribes the hollow part 15 so as to separate the hollow part 15 and a reaction chamber 20.

The hollow part 15 has an exhaust receiver tank 16 formed at the center in the longitudinal direction and a vaporizing chamber 17 formed on one end of the exhaust receiver tank 16 so as to continue to the exhaust receiver tank 16. Furthermore, a communicating part 22 is formed on another end of the exhaust receiver tank 16 so as to communicate with the reaction chamber 20.

As shown in FIG. 2, the body part 11B corresponding to the exhaust receiver tank 16 has a plurality of exhaust gas inlet ports 19. The exhaust gas inlet ports 19 are connected to an exhaust gas pipe that discharges gas from the combustion chambers of the diesel engine 10. The vaporizing chamber 17 has a spray nozzle 18 that penetrates the end plate 11L so as to spray urea water (or ammonia water) as a reducing agent into exhaust gas flowing from the exhaust receiver tank 16. Furthermore, the vaporizing chamber 17 has an untreated gas outlet port 21 for discharging exhaust gas without denitration.

The communicating part 22 includes a partition wall 23 that shields the exhaust receiver tank 16 along the cross section of the exhaust receiver tank 16, an intermediate passage 24 formed between the bulkhead 14 and the end plate 11R on the other end of the exhaust receiver tank 16, and a gas outlet opening 25 formed on the partition wall 23. As indicated by virtual lines, a reducing gas outlet valve 26 may be further provided to open and close the gas outlet opening 25. The partition wall 23 may have a pressure control port 27 that keeps a uniform pressure in the reaction chamber 20 and the exhaust receiver tank 16.

The bulkhead 14 is cylindrically formed about the eccentric axis Oe and has a double-framed wall (not shown) that absorbs a thermal stress with a certain clearance.

### (Unit group)

As shown in FIG. 1, the reaction chamber 20 contains a unit group 30 that is a stacked assembly of catalyst units 30A to 30C. The catalyst units 30A to 30C each contain stacked honeycomb catalyst elements 32.

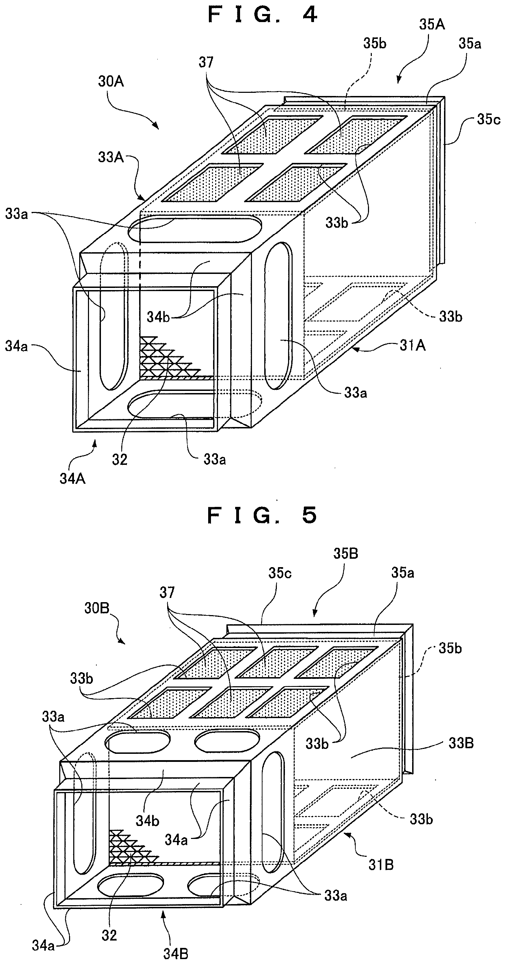

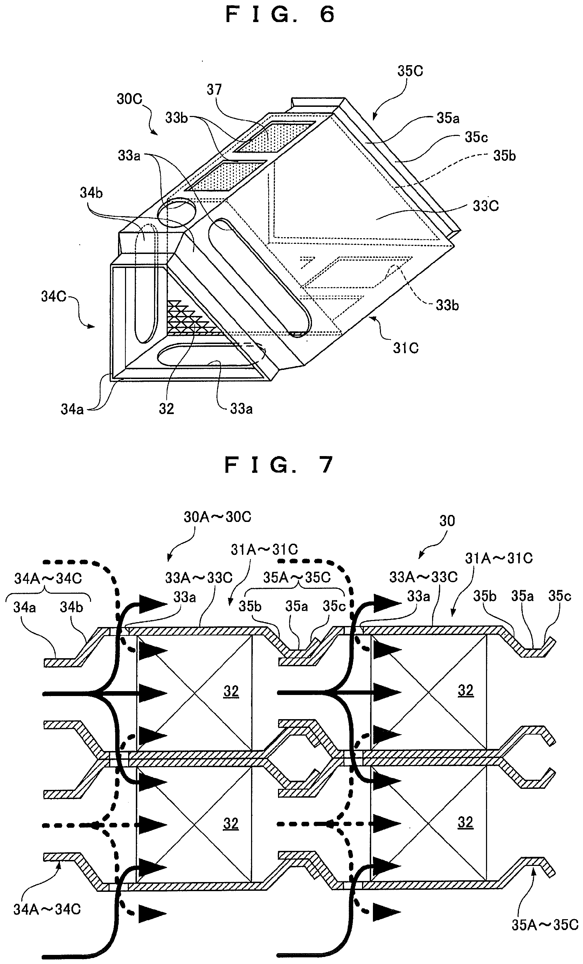

The catalyst units 30A to 30C at least include the catalyst units 30A that are square in cross section as shown in FIG. 4, the catalyst units 30B that are rectangular in cross section as shown in FIG. 5, and the catalyst units 30C that are trapezoidal (right trapezoid) in cross section as shown in FIG. 6. The catalyst units 30A to 30C are vertically stacked and are laterally arranged in cross section. The connected catalyst units 30A to 30C are identical in cross-sectional shape in the longitudinal direction along the container axis O. Exhaust gas from the front of the reaction container 11 is fed rearward to the catalyst units 30A to 30C and then laterally spreads to the catalyst units 30A to 30C.

The catalyst units 30A to 30C having the three cross-sectional shapes are identical in structure except for the cross-sectional shapes. Specifically, as shown in FIGS. 4 to 6, the catalyst units 30A to 30C respectively include storage frames 31A to 31C containing the catalyst elements 32. The storage frames 31A to 31C respectively include main bodies 33A to 33C having the cross-sectional shapes, front guide parts 34A to 34C that protrude to the front from the main bodies 33A to 33C so as to be smaller than the bores (the lengths of diagonal lines) of the main bodies 33A to 33C, and rear guide parts 35A to 35C that protrude to the rear from the main bodies 33A to 33C so as to be smaller than the bores (the lengths of diagonal lines) of the main bodies 33A to 33C and can be fit onto the front guide parts 34A and 34C.

The main bodies 33A to 33C other than a front space contain the catalyst elements 32. Four side walls surrounding the front space have first notch holes 33a for diffusing exhaust gas. For the contained catalyst elements 32, multiple second notch holes 33b for weight reduction are formed on the two side walls opposed to each other. In the second notch holes 33b, cushioning materials (gasket materials such as ceramic paper) 37 are provided so as to protect the surfaces of the catalyst elements 32 held between the cushioning materials 37.

The front guide parts 34A to 34C each include a flange 34a shaped like a polygonal cylinder extended from each of the front ends of the main bodies 33A to 33C such that a tilted connecting part 34b shaped like a frustum on the periphery is interposed between the front end of the main body and the flange. The rear guide parts 35A to 35C each include a flange 35a shaped like a polygonal cylinder extended from each of the rear ends of the main bodies 33A to 33C such that a tilted connecting part 35b shaped like a frustum on the periphery is interposed between the rear end of the main body and the flange and can be fit onto the flange 34a of each of the front guide parts 34A to 34C. Furthermore, the flange 35a has an extension guide part 35c that extends rearward to guide each of the front guide parts 34A to 34C.

As shown in FIG. 7, the rear guide parts 35A to 35C of the catalyst units 30A to 30C located at the front are fit onto the front guide parts 34A to 34C of the catalyst units 30A to 30C located at the rear, longitudinally connecting a plurality of the catalyst units 30A to 30C identical in cross-sectional shape. Moreover, the catalyst units 30A to 30C are assembled in the vertical and width directions such that the main bodies 33A to 33C of the catalyst units 30A to 30C that are identical in shape or vary in cross-sectional shape are in contact with one another over the side walls of the main bodies 33A to 33C. The unit group 30 is assembled thus.

Hence, exhaust gas flowing into the front catalyst units 30A to 30C from the front enters the catalyst units 30A to 30C located at the rear and laterally flows and spreads into the adjacent catalyst units 30A to 30C through the first notch holes 33a, thereby improving reaction efficiency.

The unit group 30 is supported in an extendable manner by a plurality of outer supports 36 interposed between the unit group 30 and the body part 11B. The unit group 30 is positioned with respect to the container axis O by fasteners and retainers (not shown) located in the front of the body part 11B.

As shown in FIGS. 1 and 2, the outer periphery of the unit group 30 includes a partial outer part of an octagon (polygon) substantially inscribed in the body part 11B of the reaction container 11. The outer part includes surfaces (horizontal and vertical surfaces in FIGS. 1 and 2) forming the sides of the catalyst units 30A and 30B that are square and rectangular in cross section, and surfaces inclined at a predetermined tilt angle so as to form the oblique sides of the catalyst units 30C that are trapezoidal in cross section. Since the inclined surfaces of the octagon form the oblique sides of the catalyst units 30C that are trapezoidal in cross section, the polygon substantially inscribed in the body part 11B can be easily formed, allowing installation of the catalyst elements 32 with a sufficient filling area ratio in the reaction chamber 20 via the catalyst units 30A to 30C. This configuration can improve a filling area ratio as compared with oblique sides formed like steps by assembling only the catalyst units 30A and 30B that are square and rectangular in cross section.

Like the outer periphery of the unit group 30, the inner periphery of the unit group 30 includes partial outer surfaces of an octagon (polygon) substantially circumscribing the bulkhead 14, the inner periphery corresponding to the cylindrical bulkhead 14. Moreover, the inner periphery includes surfaces (horizontal and vertical surfaces in FIGS. 1 and 2) forming the sides of the catalyst units 30A and 30B that are square and rectangular in cross section, and surfaces inclined at a predetermined tilt angle so as to form the oblique sides of the catalyst units 30C that are trapezoidal in cross section. With this configuration, the unit group 30 includes the catalyst units 30C that are trapezoidal in cross section, allowing installation of the catalyst elements 32 with a sufficient filling area ratio in the reaction chamber 20.

The outer periphery and the inner periphery of the unit group 30 include parts of octagons. The shape of the unit group 30 is not limited to an octagon. For example, the shape can be selected at least from a hexagon to a dodecagon according to the size of the reaction container 11. The catalyst unit 30C, which is trapezoidal in cross section, may be shaped like a trapezoid other than a right trapezoid. The oblique side of the catalyst unit 30C that is trapezoidal in cross section may be replaced with the oblique side of a catalyst unit with a right-angled triangle in cross section.

### (Exhaust gas denitration device)

A denitrated gas discharge pipe 41 is connected to a denitrated gas outlet port 28 of the reaction container 11. A bypass pipe 42 is connected between the untreated gas outlet port 21 and the gas inlet port of a turbine 12T of the supercharger 12. The denitrated gas discharge pipe 41 is connected near the outlet of the bypass pipe 42. Moreover, a denitrated gas outlet valve 43 for turning on and off denitrated gas is disposed near the outlet of the denitrated gas discharge pipe 41. An exhaust gas switching valve 44 is disposed near the inlet of the bypass pipe 42 so as to switch exhaust gas to be introduced into the turbine 12T of the supercharger 12, between untreated exhaust gas and denitrated exhaust gas.

The outlet of the turbine 12T of the supercharger 12 is connected to a funnel for discharging exhaust gas. A suction pipe 46 for sucking air through a filter 45 is connected to the inlet of a compressor 12C. A compressed air supply pipe 48 including an air cooler 47 is connected to the scavenging air receiver tank 13 from the outlet of the compressor 12C. Furthermore, scavenging pipes 49 for supplying compressed combustible air are connected between the scavenging air receiver tank 13 and the combustion chambers of the diesel engine 10.

Thus, in the denitration of exhaust gas discharged from the diesel engine 10, the denitrated gas outlet valve 43 is operated to open the denitrated gas discharge pipe 41, and the exhaust gas switching valve 44 is operated to close the bypass pipe 42. In the vaporizing chamber 17, urea water is sprayed as a reducing agent from the spray nozzle 18 into exhaust gas, and then the exhaust gas is introduced into the reaction chamber 20 through the communicating part 22. Subsequently, the exhaust gas comes into contact with the catalyst elements 32 in the catalyst units 30A to 30C and is denitrated therein. The denitrated exhaust gas is then introduced into the turbine 12T of the supercharger 12 from the denitrated gas outlet port 28 through the denitrated gas discharge pipe 41. After the supercharger 12 is driven, the exhaust gas is discharged through the funnel. Moreover, air is introduced from the suction pipe 46 into the compressor 12C through the filter 45 and is compressed therein. The compressed combustible air is cooled by the air cooler 47 in the compressed air supply pipe 48 and then is introduced into the scavenging air receiver tank 13. Subsequently, the combustible air is supplied from the scavenging air receiver tank 13 into the combustion chambers of the diesel engine 10 through the scavenging pipes 49.

If exhaust gas discharged from the diesel engine 10 is not denitrated, the denitrated gas outlet valve 43 is operated to close the denitrated gas discharge pipe 41 and the exhaust gas switching valve 44 is operated to open the bypass pipe 42. Subsequently, spraying of urea water from the spray nozzle 18 is stopped. Thus, exhaust gas introduced into the exhaust receiver tank 16 is then introduced into the gas inlet port of the turbine 12T from the untreated gas outlet port 21 through the bypass pipe 42. After the supercharger 12 is driven, the exhaust gas is discharged from the funnel.

In this configuration, the hollow part 15 of the reaction container 11 is a cylinder that is circular in cross section, thereby improving the cushioning properties of the exhaust receiver tank 16 so as to effectively cushion exhaust gas. In the vaporizing chamber 17, spraying in a conical shape from the spray nozzle 18 can effectively prevent urea water sprayed from the spray nozzle 18 from being deposited on the bulkhead 14.

According to the first embodiment, the catalyst elements 32 are stored in the storage frames 31A to 31C of the catalyst units 30A to 30C. The storage frames 31A to 31C are square, rectangular, and trapezoidal in cross section. The catalyst units 30A to 30C are vertically, horizontally, and longitudinally assembled into the reaction chamber 20 that is substantially crescent-shaped in the reaction container 11 excluding the hollow part 15, forming the unit group 30. The outer periphery of the unit group 30 includes a partial outer surface of an octagon substantially inscribed in the body part. The inclined surface of the octagon forms the oblique side of the catalyst unit 30C that is trapezoidal in cross section, allowing installation of the catalyst elements 32 with a sufficient filling area ratio via the regular octagonal unit group 30 substantially inscribed in the body part 11B. Moreover, since the catalyst elements 32 are stored in the storage frames 31A to 31C of the catalyst units 30A to 30C, sufficient strength can be obtained so as to improve durability against, for example, vibrations in a ship or the like.

The inner periphery of the unit group 30 is shaped like a partial octagon that is in contact with the bulkhead 14 or is fit with a similar shape onto the bulkhead 14 with a predetermined gap. On the inner periphery of the unit group 30, surfaces forming the oblique sides of the catalyst units 30C that are trapezoidal in cross section constitute inclined surfaces that cannot be formed by the outer surfaces of the catalyst units 30A and 30B that are square and rectangular in cross section. Thus, even if the reaction chamber 20 has an irregular shape in cross section, e.g., a crescent shape that is eccentric with the hollow part 15 in the body part 11B circular in cross section, the catalyst elements 32 can be installed with a sufficient filling area ratio through the storage frames 31A to 31C that are square, rectangular, and trapezoidal in cross section.

Since the hollow part 15 is eccentric in the reaction container 11 and is in contact with the body part 11B, the exhaust receiver tank 16 provided in the hollow part 15 facilitates supply and discharge of exhaust gas, increasing flexibility in the use of the hollow part 15.

Furthermore, the longitudinal connection and combination of the catalyst units 30A to 30C can form the unit group 30 in any size and any shape in cross section. The catalyst units 30A to 30C containing the catalyst elements 32 are combined in contact with one another, achieving sufficient strength and durability.

Moreover, the provision of the exhaust receiver tank 16 and the vaporizing chamber 17 in the hollow part 15 of the reaction container 11 allows integration of the components of the exhaust gas denitration device in the reaction container 11, leading to a size reduction of the exhaust gas denitration device.

### [Second example]

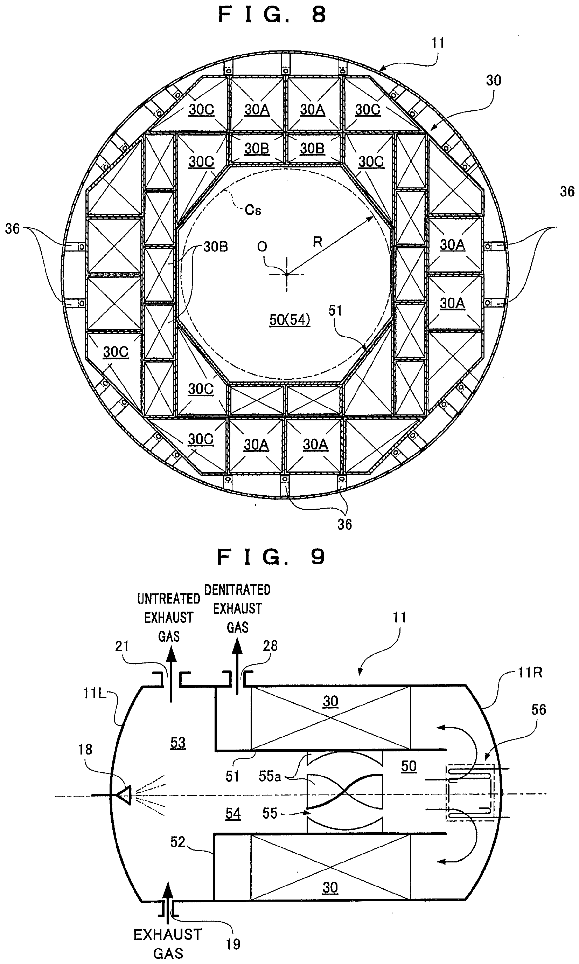

Referring to FIGS. 8 and 9, a second example will be described below. In the second example, a hollow part 50 is located on a container axis O of a reaction container 11. The same members as those of the first embodiment will be indicated by the same reference numerals and the explanation thereof is omitted.

As shown in FIG. 9, the cylindrical hollow part 50 is formed on the container axis O of the reaction container 11 via a cylindrical bulkhead 51. On one end of the reaction container 11, a vaporizing receiver chamber 53 acting as a vaporizing chamber and an exhaust receiver tank is formed by a horizontal partition wall 52 that connects the end of the bulkhead 51 and a body part 11B. In the vaporizing receiver chamber 53, an end plate 11L has a spray nozzle 18 and the body part 11B has an untreated gas outlet port 21. The hollow part 50 includes a gas passage 54 and a static mixer (mixing chamber) 55 having a mixing blade 55a. A heat exchanger 56 is disposed at an outlet on the other end of the hollow part 50.

As shown in FIG. 9, the outer periphery of the bulkhead 51 constitutes a reaction chamber 20 and has a unit group 30 annular in cross section. Moreover, catalyst units 30A to 30C contain honeycomb catalyst elements 32. The catalyst units 30A to 30C include the catalyst units 30A that are square in cross section, the catalyst units 30B that are rectangular in cross section, and the catalyst units 30C that are trapezoidal (right trapezoid) in cross section. The catalyst units 30A to 30C are vertically stacked and are laterally arranged in cross section. Moreover, the catalyst units 30A to 30C identical in cross section are engaged and connected in the longitudinal direction along the container axis O.

The outer periphery of the unit group 30 includes the outer surface of an octagon (polygon) substantially inscribed in the body part 11B of the reaction container 11. The outer surface includes surfaces (horizontal and vertical surfaces in the figures) composed of the sides of the catalyst units 30A and 30B that are square and rectangular in cross section, and surfaces inclined at a predetermined tilt angle (45°) so as to form the oblique sides of the catalyst units 30C that are trapezoidal in cross section. The unit group 30 including the catalyst units 30C trapezoidal in cross section has an outer surface octagonal in cross section, allowing installation of the catalyst elements 32 with a sufficient filling area ratio in the reaction chamber 20. Thus, it is understood that this configuration can improve a filling area ratio as compared with oblique sides formed like steps by assembling only the catalyst units 30A and 30B that are square and rectangular in cross section.

The inner periphery of the unit group 30 is also shaped like an octagon (polygon) substantially circumscribing the bulkhead 51, the inner periphery corresponding to the bulkhead 51. Moreover, the inner periphery includes surfaces (horizontal and vertical surfaces in the figures) composed of the sides of the catalyst units 30A and 30B that are square and rectangular in cross section, and surfaces inclined at a predetermined tilt angle (45°) so as to form the oblique sides of the catalyst units 30C that are trapezoidal in cross section. With this configuration, the unit group 30 includes the catalyst units 30C that are trapezoidal in cross section, allowing installation of the catalyst elements 32 with a sufficient filling area ratio in the reaction chamber 20.

As a matter of course, the outer periphery and the inner periphery of the unit group 30 may be shaped like other polygons.

According to the second example, the provision of the mixing chamber 55, the heat exchanger 56, and the gas passage 54 in the hollow part 50 of the reaction container 11 allows integration of the components of the exhaust gas denitration device in the reaction container, leading to a size reduction of the exhaust gas denitration device.

## Claims

1. A marine exhaust gas denitration device for an exhaust gas passage of a marine diesel engine (10) and comprising a reaction container (11) that receives exhaust gas discharged from the marine diesel engine (10), the reaction container (11) containing catalyst elements (32),
the reaction container (11) being shaped like a cylinder,
the reaction container (11) including a columnar hollow part (15) that faces a body part (11B) of the reaction container (11) and is formed about an eccentric axis (Oe) located at a predetermined distance from a container axis (O), a bulkhead (14) shaped like a partial polygonal cylinder that substantially circumscribe the hollow part (15), and a reaction chamber (20) that is separated from the hollow part (15) via the bulkhead (14) and is formed in an axial direction of the reaction container (11),
the reaction chamber (20) including a unit group (30) containing a plurality of assembled catalyst units (30A to 30C),
the catalyst units (30A to 30C) being shaped at least like a square, a rectangle, and a trapezoid in cross section, the catalyst units (30A to 30C) containing the catalyst elements (32),
the unit group (30) having an outer periphery that includes one of an outer surface of a polygonal column substantially inscribed in the body part (11B) of the reaction container (11) and a partial outer surface of the polygonal column, the outer periphery including surfaces forming sides of the catalyst units (30A and 30B) that are square and rectangular in cross section and surfaces being inclined at a predetermined angle with respect to the surfaces forming the sides of the catalyst units (30A and 30B) that are square and rectangular in cross section, and forming oblique sides of the catalyst units (30C) that are trapezoidal in cross section,
the body part (11B) of the reaction container (11) having a plurality of exhaust gas inlet ports (19) that introduce exhaust gas discharged from the marine diesel engine (10) into the hollow part (15) facing the body part (11B), the hollow part (15) having an exhaust receiver tank (16) formed at a center,
the hollow part (15) having a vaporizing chamber (17) on one end and a communicating part (22) on another end, the vaporizing chamber (17) communicating with the exhaust receiver tank (16), the communicating part (22) connecting the exhaust receiver tank (16) and the reaction chamber (20), and
the reaction container (11) including an end plate (11L) that faces the vaporizing chamber (17), the end plate (11L) having a spray nozzle (18) so as to spray a reducing agent in a conical shape.

2. The marine exhaust gas denitration device according to claim 1, wherein
the unit group (30) has an inner periphery that is formed on one of an outer surface of a polygonal cylinder fit the bulkhead (14) and having a similar shape with the bulkhead (14) and a partial outer surface of the polygonal cylinder, the inner periphery including surfaces forming sides of the catalyst units (30A and 30B) that are square and rectangular in cross section and surfaces being inclined at a predetermined angle with respect to the surfaces forming the sides of the catalyst units (30A and 30B) that are square and rectangular in cross section, and forming oblique sides of the catalyst units (30C) that are trapezoidal in cross section.

3. The marine exhaust gas denitration device according to one of claims 1 and 2, wherein the catalyst units (30A to 30C) contain the honeycomb catalyst elements (32) stacked in main bodies (33A to 33C) of storage frames (31A to 31C), each of the storage frames (31A to 31C) including a front guide part (34A to 34C) and a rear guide part (35A to 35C) at a front and a rear of the main body (33A to 33C), the front and rear guide parts (34A to 34C and 35A to 35C) fit to each other so as to connect the storage frames (31A to 31C) in a flowing direction of exhaust gas, and
the unit group (30) is assembled such that side surfaces of the storage frames (31A to 31C) are in contact with each other.

4. The marine exhaust gas denitration device according to one of claims 1 to 3, wherein
the vaporizing chamber (17) has untreated gas outlet port (21) for discharging untreated exhaust gas,
the reaction chamber (20) has a denitrated gas outlet port (28) at one end, the denitrated gas outlet port (28) discharging denitrated exhaust gas, and
the communicating part (22) includes a partition wall (23) that shields the exhaust receiver tank (16), a gas outlet opening (25) and a pressure control port (27) that are formed on the partition wall (23), and a reducing gas outlet valve (26) that opens and closes the gas outlet opening (25).

## Patentansprüche

1. Vorrichtung zur Denitrierung von Schiffsabgasen für einen Abgaskanal eines Schiffsdieselmotors (10), mit einem Reaktionsbehälter (11), der das von dem Schiffsdieselmotor (10) abgegebene Abgas aufnimmt, wobei der Reaktionsbehälter (11) Katalysatorelemente (32) enthält,
wobei der Reaktionsbehälter (11) wie ein Zylinder geformt ist,
wobei der Reaktionsbehälter (11) enthält: ein säulenförmiges hohles Teil (15), das einem Körperteil (11B) des Reaktionsbehälters (11) zugewandt und um eine Exzenterachse (Oe) gebildet ist, die in einem vorbestimmten Abstand von einer Behälterachse (O) angeordnet ist; ein Schott (14), das wie ein teilweiser polygonaler Zylinder geformt ist, der das hohle Teil (15) im Wesentlichen umschließt; und eine Reaktionskammer (20), die von dem hohlen Teil (15) über das Schott (14) getrennt und in einer Axialrichtung der Reaktionsbehälter (11) gebildet ist,
wobei die Reaktionskammer (20) eine Einheitengruppe (30) umfasst, die eine Vielzahl von zusammengesetzten Katalysatoreinheiten (30A bis 30C) enthält,
wobei die Katalysatoreinheiten (30A bis 30C) mindestens wie ein Quadrat, ein Rechteck und ein Trapez im Querschnitt geformt sind, wobei die Katalysatoreinheiten (30A bis 30C) die Katalysatorelemente (32) enthalten,
wobei die Einheitengruppe (30) einen Außenumfang aufweist, der eine Außenfläche einer polygonalen Säule, die im Wesentlichen in dem Körperteil (11B) des Reaktionsbehälters (11) eingeschrieben ist, oder eine Teilaußenfläche der polygonalen Säule (11) umfasst, wobei der Außenumfang Oberflächen umfasst, die Seiten der Katalysatoreinheiten (30A und 30B) bilden, die quadratisch und rechteckig im Querschnitt sind, und Oberflächen, die in einem vorbestimmten Winkel in Bezug auf die Oberflächen geneigt sind, die die Seiten der Katalysatorelemente bilden, die im Querschnitt quadratisch und rechteckig sind, und die schräge Seiten der Katalysatoreinheiten (30C) bilden, die im Querschnitt trapezförmig sind,
wobei das Körperteil (11B) des Reaktionsbehälters (11) eine Vielzahl von Abgaseingangsöffnungen (19) aufweist, die das von dem Schiffsdieselmotor (10) abgeführte Abgas in das dem Körperteil (11B) zugewandte hohle Teil (15) einleiten, wobei das hohle Teil (15) einen in einer Mitte ausgebildeten Abgassammelbehälter (16) aufweist,
wobei das hohle Teil (15) eine Verdampfungskammer (17) an einem Ende und ein kommunizierendes Teil (22) an einem anderen Ende aufweist, wobei die Verdampfungskammer (17) mit dem Abgassammelbehälter (16) in Verbindung steht, wobei das kommunizierende Teil (22) den Abgassammelbehälter (16) und die Reaktionskammer (20) verbindet, und
wobei der Reaktionsbehälter (11) eine Endplatte (11L) aufweist, die der Verdampfungskammer (17) zugewandt ist, wobei die Endplatte (11L) eine Sprühdüse (18) aufweist, um ein Reduktionsmittel in einer konischen Form zu versprühen.

2. Vorrichtung zur Denitrierung von Schiffsabgasen nach Anspruch 1, wobei die Einheitengruppe (30) einen inneren Umfang aufweist, der auf einer Außenfläche eines polygonalen Zylinders gebildet ist, der an dem Schott (14) anliegt und eine ähnliche Form mit dem Schott (14) aufweist, oder auf einer partiellen Außenfläche des polygonalen Zylinders gebildet ist, wobei der innere Umfang Oberflächen aufweist, die Seiten der Katalysatoreinheiten (30A und 30B) bilden, die quadratisch und rechteckig im Querschnitt sind, und Oberflächen, die in einem vorbestimmten Winkel in Bezug auf die Oberflächen geneigt sind, die die Seiten der Katalysatorelemente bilden, die im Querschnitt quadratisch und rechteckig sind, und die schräge Seiten der Katalysatoreinheiten (30C) bilden, die im Querschnitt trapezförmig sind.

3. Vorrichtung zur Denitrierung von Schiffsabgasen nach einem der Ansprüche 1 und 2, wobei die Katalysatoreinheiten (30A bis 30C) die in Hauptkörpern (33A bis 33C) von Speicherrahmen (31A bis 31C) gestapelten Wabenkatalysatorelemente (32) enthalten, wobei jeder der Speicherrahmen (31A bis 31C) ein vorderes Führungsteil (34A bis 34C) und ein hinteres Führungsteil (35A bis 35C) an einer Vorderseite und an einer Rückseite des Hauptkörpers (33A bis 33C) enthält, wobei die vorderen und hinteren Führungsteile (34A bis 34C und 35A bis 35C) aneinanderpassen, um so die Speicherrahmen (31A bis 31C) in einer Strömungsrichtung des Abgases zu verbinden, und
wobei die Einheitengruppe (30) derart zusammengesetzt ist, so dass Seitenflächen der Speicherrahmen (31A bis 31C) miteinander in Kontakt sind.

4. Vorrichtung zur Denitrierung von Schiffsabgasen nach einem der Ansprüche 1 bis 3, wobei die Verdampfungskammer (17) eine Austrittsöffnung (21) für unbehandeltes Gas zur Ableitung von unbehandeltem Abgas aufweist,
wobei die Reaktionskammer (20) an einem Ende eine Austrittsöffnung (28) für denitriertes Gas aufweist,
wobei die Austrittsöffnung (28) für denitriertes Gas denitriertes Abgas ableitet, und
wobei der kommunizierende Teil (22) eine Trennwand (23), die den Abgassammelbehälter (16) abschirmt, eine Gasaustrittsöffnung (25) und einen Druckkontrollanschluss (27), die an der Trennwand (23) ausgebildet sind, und ein Reduziergasaustrittsventil (26), das die Gasaustrittsöffnung (25) öffnet und schließt, umfasst.

## Revendications

1. Dispositif de dénitrification de gaz d'échappement marin pour un passage de gaz d'échappement d'un moteur diesel marin (10), et comprenant un récipient de réaction (11) qui reçoit des gaz d'échappement déchargés à partir du moteur diesel marin (10), le récipient de réaction (11) contenant des éléments de catalyseur (32),
le récipient de réaction (11) étant formé sous la forme d'un cylindre,
le récipient de réaction (11) comprenant une partie creuse en colonne (15) qui fait face à une partie de corps (11B) du récipient de réaction (11) et qui est formée autour d'un axe excentrique (Oe) situé à une distance prédéterminée d'un axe de récipient (O), une cloison (14) formée sous la forme d'un cylindre polygonal partiel qui circonscrit sensiblement la partie creuse (15), et une chambre de réaction (20) qui est séparée de la partie creuse (15) par l'intermédiaire de la cloison (14) et qui est formée dans une direction axiale du récipient de réaction (11),
la chambre de réaction (20) comprenant un groupe d'unités (30) contenant une pluralité d'unités de catalyseur assemblées (30A à 30C),
les unités de catalyseur (30A à 30C) étant formées au moins sous la forme d'un carré, d'un rectangle et d'un trapèze en section transversale, les unités de catalyseur (30A à 30C) contenant les éléments de catalyseur (32),
le groupe d'unités (30) comportant une périphérie extérieure qui comprend l'une d'une surface extérieure d'une colonne polygonale sensiblement inscrite dans la partie de corps (11B) du récipient de réaction (11) et d'une surface extérieure partielle de la colonne polygonale, la périphérie extérieure comprenant des surfaces formant des côtés des unités de catalyseur (30A et 30B) qui sont carrées et rectangulaires en section transversale et des surfaces qui sont inclinées d'un angle prédéterminé par rapport aux surfaces formant les côtés des unités de catalyseur (30A et 30B) qui sont carrées et rectangulaires en section transversale, et formant des côtés obliques des unités de catalyseur (30C) qui sont trapézoïdales en section transversale,
la partie de corps (11B) du récipient de réaction (11) comportant une pluralité d'orifices d'entrée de gaz d'échappement (19) qui introduisent des gaz d'échappement déchargés à partir du moteur diesel marin (10) dans la partie creuse (15) faisant face à la partie de corps (11B), la partie creuse (15) comportant un réservoir récepteur d'échappement (16) formé en un centre,
la partie creuse (15) comportant une chambre de vaporisation (17) sur une extrémité et une partie de communication (22) sur une autre extrémité, la chambre de vaporisation (17) communiquant avec le réservoir récepteur d'échappement (16), la partie de communication (22) reliant le réservoir récepteur d'échappement (16) et la chambre de réaction (20), et
le récipient de réaction (11) comprenant une plaque d'extrémité (11L) qui fait face à la chambre de vaporisation (17), la plaque d'extrémité (11L) comportant une buse de pulvérisation (18) de façon à pulvériser un agent réducteur sous une forme conique.

2. Dispositif de dénitrification de gaz d'échappement marin selon la revendication 1, dans lequel :
le groupe d'unités (30) comporte une périphérie intérieure qui est formée sur l'une d'une surface extérieure d'un cylindre polygonal adapté à la cloison (14) et ayant une forme similaire à celle de la cloison (14) et d'une surface extérieure partielle du cylindre polygonal, la périphérie intérieure comprenant des surfaces formant des côtés des unités de catalyseur (30A et 30B) qui sont carrées et rectangulaires en section transversale et des surfaces qui sont inclinées d'un angle prédéterminé par rapport aux surfaces formant les côtés des unités de catalyseur (30A et 30B) qui sont carrées et rectangulaires en section transversale, et formant des côtés obliques des unités de catalyseur (30C) qui sont trapézoïdales en section transversale.

3. Dispositif de dénitrification de gaz d'échappement marin selon l'une des revendications 1 et 2, dans lequel les unités de catalyseur (30A à 30C) contiennent les éléments de catalyseur en nid d'abeilles (32) empilés dans des corps principaux (33A à 33C) de bâtis de stockage (31A à 31C), chacun des bâtis de stockage (31A à 31C) comprenant une partie de guide avant (34A à 34C) et une partie de guide arrière (35A à 35C), à l'avant et à l'arrière du corps principal (33A à 33C), les parties de guide avant et arrière (34A à 34C et 35A à 35C) s'adaptant entre elles de façon à relier les bâtis de stockage (31A à 31C) dans une direction d'écoulement de gaz d'échappement, et
le groupe d'unités (30) est assemblé de telle sorte que des surfaces latérales des bâtis de stockage (31A à 31C) soient en contact entre elles.

4. Dispositif de dénitrification de gaz d'échappement marin selon l'une des revendications 1 à 3, dans lequel :
la chambre de vaporisation (17) comporte un orifice de sortie de gaz non traités (21) pour décharger des gaz d'échappement non traités,
la chambre de réaction (20) comporte un orifice de sortie de gaz dénitrifiés (28) à une extrémité, l'orifice de sortie de gaz dénitrifiés (28) déchargeant des gaz d'échappement dénitrifiés, et
la partie de communication (22) comprend une paroi de séparation (23) qui protège le réservoir récepteur d'échappement (16), une ouverture de sortie de gaz (25) et un orifice de contrôle de pression (27) qui sont formés sur la paroi de séparation (23), et une vanne de sortie de gaz réducteur (26) qui ouvre et qui ferme l'ouverture de sortie de gaz (25) .
